# EUROPEAN PATENT SPECIFICATION

(11) **EP 1 889 755 B1**
(45) Date of publication and mention of the grant of the patent: **08.07.2009**
(21) Application number: 07113335.9
(22) Date of filing: 27.07.2007
(51) Int. Cl.: B60R 21/06

(54) **Retaining system for a separation element between the passenger compartment and the luggage compartment of a vehicle**
Haltesystem für ein Trennelement zwischen dem Insassenraum und dem Laderaum eines Fahrzeugs
Système de rétention pour élément de séparation entre le compartiment passager et le compartiment des bagages d'un véhicule

(30) Priority: 28.07.2006 IT TO20060566
(43) Date of publication of application: 20.02.2008
(73) Proprietor: Fibro S.p.A., 10040 Cumiana (IT)
(72) Inventor: Signoretto, Carlo Teresio, 10129 Torino (IT)
(74) Representative: Jorio, Paolo

(56) References cited:
- EP-A- 1 595 738
- DE-B3-1102004 018 35
- DE-C1- 10 007 613

## Description

This invention relates to a retaining system for a separation element between the passenger compartment and the luggage compartment of a vehicle, such as a safety net or parcel shelf.

EP 0649 778B1 discloses the placing of a separation element between the passenger compartment and the luggage compartment of a vehicle composed of a safety net having two sides parallel to each other, each provided with fixing means to connect the net to the vehicle; in particular, one of the sides of the safety net is provided with a bar-fixing assembly having, at at least one of its ends, an elongated cavity with a tubular insert arranged inside the cavity and fixed therein and a retaining element provided with a leg, which engages sliding inside the insert and one end of which, which projects outside the bar-fixing assembly, has anchoring means (a mushroom head) to pockets mounted in the vehicle; a spring element acts between the insert and the retaining element, in relation to which it is pre-stressed so as to keep the retaining element in an end-of-travel position in relation to the insert.

The fixing device described, although satisfactory, may have the drawback that the retaining element sliding in the insert occasionally jams, due to its connecting length with the insert being relatively short in relation to the length of the bar-fixing assembly, which must be the same as substantially the entire internal width of the vehicle. This drawback is only partly overcome by providing a sliding retaining element with a relative insert and relative spring on both of the opposite ends of the bar-fixing assembly, which, however, almost doubles the cost of the device. Furthermore, both of the solutions with one or two end sliding retaining elements are subject during use to possible noises (squeaking) due to the play which inevitably forms with use between plastic inserts and relative sliding retaining elements, which are made of metal, particularly as a result of the relatively high stress to which the latter are subjected due to the length of the bar-fixing assembly.

DE 100 07 613 C1 discloses a retaining system for a separation element between the passenger compartment and the luggage compartment of a vehicle, such as a safety net or a removable parcel shelf, in which the separation element has at least one first side that can be fixed to the bodywork of the vehicle by first connection means; the said first connection means comprise: a tubular pocket fixed integrally to the first side of the separation element; a first substantially rigid tubular element housed sliding inside the tubular pocket; a second substantially rigid tubular element housed telescopically and concentrically sliding inside the tubular pocket, projecting beyond a first end thereof located during use inside the tubular pocket; first and second guide means connected to the first and second tubular element and mutually co-operating; and shank-retaining means that can be bound during use to anchoring means mounted on the vehicle bodywork; the shank-retaining means being mounted in an axially and angularly fixed position by respective opposite ends of the first and second tubular element, said ends facing the opposite way to the first end of the first tubular element and beyond which the retaining means project axially.

The aim of this invention is to overcome the drawbacks described by providing a retaining system for a separation element between the passenger compartment and the luggage compartment of a vehicle, such as for example a safety net, which is of a contained size and production cost, operates reliably, therefore rarely or never subject to jamming, and which due to its structure is rarely subject during use to wear and, consequently, tends not to generate irritating noises even after a long period of use.

On the basis of the invention, a retaining system for a separation element between the passenger compartment and the luggage compartment of a vehicle, for example a safety net or a removable parcel shelf, as described in claim 1, is therefore provided.

In particular, the retaining system according to the invention includes first means of connection to the bodywork of the vehicle for a first side of the separation element; these first means of connection comprise a tubular pocket fixed integrally to the first side of the separation element along the entire length thereof; a first substantially rigid tubular element housed sliding inside the tubular pocket; a second substantially rigid tubular element housed telescopically and concentrically sliding inside the first tubular element, projecting beyond a first end thereof located during use inside the tubular pocket; first and second guide means associated with the first and second tubular element and mutually co-operating; resilient means inserted between the first and second guide means to push the second tubular element out of the first; and shank-retaining means that can be bound during use to anchoring means mounted on the vehicle bodywork; the shank-retaining means being carried integrally in an axially and angularly fixed position by respective opposite ends of the first and second tubular element, said ends facing the opposite way to the first end of the first tubular element and beyond which the retaining means project axially.

The first guide means consist in a first bush made of a synthetic plastic material and lock-fitted inside the first end of the first tubular element, which is cup-shaped and has its concavity facing the outside of the first tubular element and towards the second tubular element; similarly, the second guide means comprise a second bush made of a synthetic plastic material lock-fitted inside a first end of the second tubular element facing towards the first tubular element, this second bush also being cup-shaped and having its concavity facing the outside of the second tubular element and towards the first.

The second guide means also comprise a metal pin integrally carried on the second bush, a first end of the metal pin being embedded in a bottom wall of the second bush and a second end of the metal pin projecting beyond the second bush towards the first bush and engaging sliding passing through a seat made through a bottom wall of the first bush; the second end of the through pin has a clinched head designed to abut axially against the bottom wall of the first bush, on the outside thereof and facing the opposite way to the second bush.

Lastly, the resilient means consist in a helical spring pack-mounted between the respective bottom walls of the first and second bush and housed in a sleeve portion of the first bush and, partly, inside the second bush, which is in turn housed in the first bush together with the first end of the second tubular element.

In this way, a telescopic spring system is created which, after making the bushes and tubular elements the appropriate length, is placed substantially along the centreline of the bar-fixing assembly composed of the assembly of bushes and relative tubular elements and which, above all, can have a relatively long length even in the case of a relatively short spring travel, determined by the relative length of the metal pin integrally carried on the second bush, compared to the length of the first bush.

This allows the operating stresses to be balanced and distributed in the optimum manner, avoiding jamming even in the case of only one spring system (rather than two, as in the known solutions) and to keep the radial compression load exerted during use by the metal pin against its sliding seat in the first bush relatively low, which considerably reduces possible wear and, above all, the possible generation during use of irritating noises.

Lastly, by mounting the bar-fixing assembly sliding in a tubular pocket integrally carried on the side of the separation element to be fixed, the central spring system is prevented during use from causing puckering of the separation element, which therefore stays perfectly taut.

Further aims and advantages of the invention will emerge from the following description of a non-limiting embodiment, provided purely by way of example and with reference to the accompanying drawings, in which:
- Figure 1 is a schematic elevated view of a separation element between the passenger compartment and the luggage compartment or trunk of a vehicle provided with a retaining system according to the invention, shown as an external view in Figure 1a and in longitudinal section in Figure 1b;
- Figure 2 shows on an enlarged scale a central detail of the retaining system of the invention as shown in longitudinal section in Figure 1b, in particular of the part circled in Figure 1b; and
- Figure 3 shows a top partly-cutaway perspective view, on an even larger scale, of the structural detail shown in Figure 2.

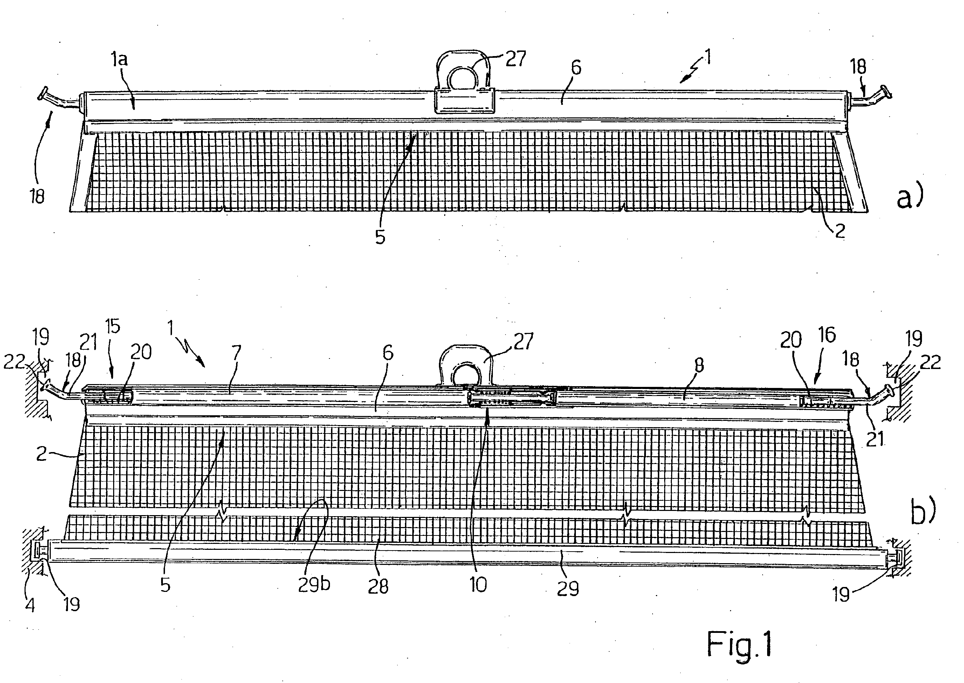

With reference to Figures 1 to 3, 1 shows as a whole a retaining system for a separation element 2 between a passenger compartment and a luggage compartment, known and not shown for simplicity's sake, of a vehicle, of which only part of a shell or the bodywork 4 is shown schematically (Figure 1b); in the example shown, the separation element 2 is a safety net, for example of the roll-up blind type, that can be positioned taut during use between the rear seat of the vehicle and the ceiling or roof of the passenger compartment; however, the retaining system 1 which will be described could just as easily equip another type of separation element, such as a removable parcel shelf.

The separation element 2 has at least a first side 5 that can be fixed to the bodywork 4 of the vehicle by means of the first connection means la forming part, according to the invention, of the retaining system 1 and comprising a tubular pocket 6 fixed integrally to the side 5 of the separation element 2 along the entire length thereof, a first substantially rigid tubular element 7, composed, for example, of a piece of metal tube, housed sliding inside the tubular pocket 6, and a second substantially rigid tubular element 8, similarly composed of a section of metal tube, housed telescopically and concentrically sliding inside the first tubular element 7, compared to which it has a smaller diameter, projecting beyond a first end 10 of the tubular element 7 located during use inside the tubular pocket 6.

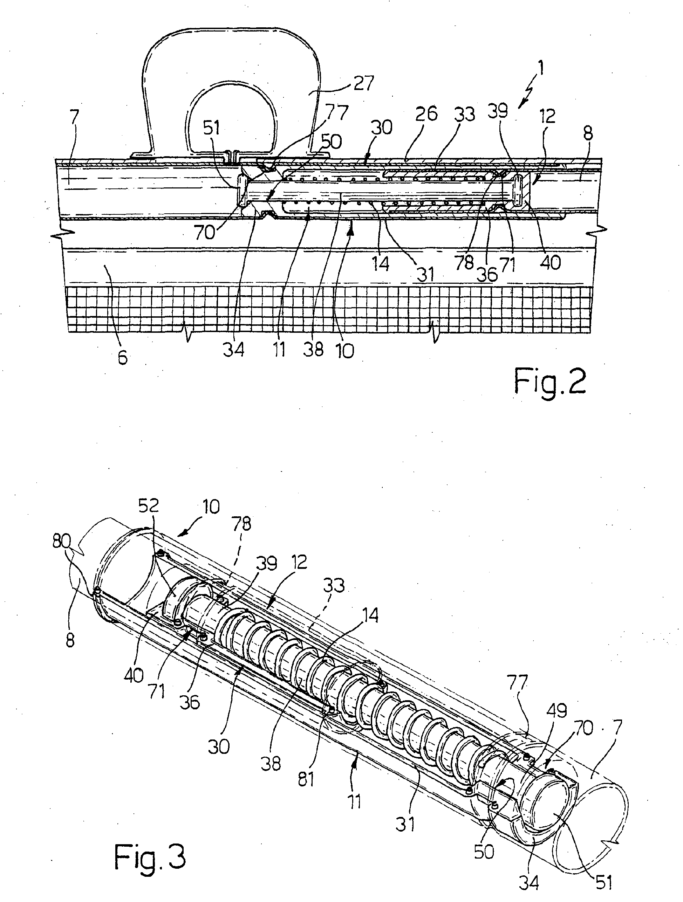

The connection means 1a of the retaining system 1 also comprise first and second guide means, shown respectively as 11 and 12 (Figures 2 and 3), associated with the first tubular element 7 and the second tubular element 8 respectively and mutually co-operating and resilient means 14 inserted appropriately preloaded between the first guide means 11 and the second guide means 12 to push the second tubular element 8 out of the first, that is in a direction such as to distance it from the end 10, towards a first end-of-travel position, in which the connection means la of the retaining system 1 have the maximum axial extension.

Respective opposite ends 15 of the first and 16 of the second tubular element (Figure 1b), facing the opposite way to the first end 10 of the first tubular element 7 are lastly provided with shank-retaining means 18 which can be secured during use to anchoring means 19 (for example pocket means of a known type and shown only schematically in Figure 1b) mounted on the bodywork 4 of the vehicle; according to an aspect of the invention, the shank-retaining means 18 are mounted integrally in an axially and angularly fixed position in the ends 15,16 of the tubular elements 7,8, beyond which ends, 15,16, the retaining means 18 project axially.

In particular, the shank-retaining means 18 comprise, at each of the said ends 15, 16, a bush 20 (Figure 1b) made of a synthetic plastic material and lock-fitted in the first and second tubular element respectively, 7 and 8 respectively, and a metal stem 21 fitted in and projecting from the respective bush 20, so as to project beyond the respective end 15,16 of the respective first and second tubular element 7,8 with one of its own opposite ends bent at an angle and having a clinched head, mushroom-shaped for example, capable of engaging with the anchoring means 19.

The tubular pocket 6 is in turn formed from a piece 26 of sheet material folded back on itself so as to form, along the axis of symmetry of the first and second tubular element 7,8, an eyelet that can be fixed integrally to the first side 5 of the separation element 2, for example by sewing or heat-welding and may also have along its centreline and on the outside a handle 27 to manoeuvre the separation element 2, which comprises a second side 28 (Figure 1b) opposite to side 5 and equipped with second connection means 29 to the bodywork of the vehicle 4 and also forming part of the retaining system 1, for example consisting of a known winding device for the separation element 2 from which the latter can be extracted by means of the handle 27 and against the action of internal resilient means of the connection means 29, through a slot 29b.

The first guide means 11 (Figures 2 and 3) consist of a first bush made of a synthetic plastic material lock-fitted inside the first end 10 of the first tubular element 7; the bush 11 is cup-shaped and has its concavity facing the outside of the first tubular element 7 and towards the second tubular element 8.

In particular, the bush 11 comprises a side wall 30 by means of which it contact-connects with an inner side surface of the first end 10 of the tubular element 7; a first part of the side wall 30 of the bush 11 is defined by a sleeve portion 31 inside which it is mounted sliding, in guided connection with an inner side surface of the sleeve portion 31, a first end 33 of the second tubular element 8 facing towards the first end 10 of the first tubular element 7. The bush 11 also comprises a bottom wall 34 having a relatively much greater thickness than that of the sleeve portion 31 and defining a second part of the side wall 30 thereof.

The second guide means 12 (Figures 2 and 3) consist of a second bush 36 made of a synthetic plastic material and lock-fitted inside the end 33 of the second tubular element 8; the bush 36 is also cup-shaped and has its concavity facing the outside of the second tubular element 8 and towards the said first tubular element 7. The guide means 12 also comprise a metal pin 38 integrally carried on the bush 36, a first end 39 of the said pin 38 is embedded (for example by having been co-moulded with it) in a bottom wall 40 of the bush 36 and a second end 49 of the said metal pin 38 projects beyond the second bush 36 towards the first bush 11 and engages sliding passing through a seat 50 made through the bottom wall 34.

The end 49 of the through-pin 38 has a clinched head 51 designed in use to abut axially against the bottom wall 34 of the first bush 11, on the outside of the latter and facing the opposite way to the second bush 36. To ensure better retention of the pin 38 in the bottom wall 40 of the bush 36, the end 39 is equipped with a similar clinched head 52.

In the case described, the said resilient means 14 consist of a helical spring pack-mounted between the respective bottom walls 34 and 40 of the bushes 11 and 36 and housed inside the sleeve portion 31 of the bush 11 and, partly, inside a similar sleeve portion of the bush 36, which is in turn housed inside the bush 11 together with the first end 33 of the second tubular element 8.

Preferably, the bushes 11 and 36 are locked in place between the first ends 10 and 33 of the tubular elements 7 and 8 by means of at least one respective radial recess 70, 71, in this case an annular recess, made radially on the outside of a side wall of the respective first and second bush 11 and 36 respectively; inside the recess 70 at least one radially internal projection 77, in this case annular, of the first tubular element 7 is engaged, while in recess 71 at least one radially internal projection 78, in this case annular, of the second tubular element 8 is engaged; both projections 77,78 are defined by respective radial crimpings made from the outside towards the inside on a side wall of the tubular elements 7 and 8 respectively.

The bushes 11 and 36 are also axially locked in place in the ends 10 and 33 by means of respective end edges 80 of the first bush 11 and 81 of the second bush 36 (Figure 3) made facing the opposite way to the respective bottom walls 34,40 thereof and connected in axial abutment to the corresponding peripheral edges of the first end 10 of the tubular element 7 and the first end 33 of the second tubular element 8.

It is clear from the description provided that the length of the bushes 11 and 36, particularly of their respective side walls which connect together and to the ends 10 and 33, can be made to any size, regardless of the travel required by the retaining system 1 described, defined by the relative length of the pin 38 in relation to the bush 11; this enables the retaining system 1, during the design stage, to be sized so as to achieve complete balancing of the loads applied and a low specific pressure exerted by the pin 38 on the bushes 11 and 36.

Thanks to the spring 14, the tubular element 8 is normally held in an end-of-travel position extracted from the element 7, determined by the axial position of the head 51 of the pin 38, which also prevents the bush 36 from coming out of 11; if necessary, the retaining system 1, if in the extracted position of the element 8 from 7 at its maximum elongation, may be shortened, for example in order to be suitable for a narrower vehicle, by compressing the spring 14 to a second end-of-travel position corresponding to a retracted position of the element 8 within the element 7, determined precisely by the relative length of the pin 38 in relation to the bushes 11 and 36; in this retracted position (not shown for simplicity's sake) the retaining system 1 will be at its minimum elongation.

Creating the retaining system 1 described, particularly its connection means 1a, simply involves obtaining the bush 36 with the pin 38 still without its integrally co-moulded head 52, fitting the bush 36 into the end 33 of the tubular element 8 with the side wall of the latter still intact, obtaining the projection 81 by crimping so as to lock the bush 36 in place, then fitting the helical spring 14 onto the pin 38 and into the sleeve portion of the bush 36, making the bush 11, fitting it onto the end 39 of the pin 38 and onto the end 33, against the action of the spring 14 so as to preload it, to the desired axial position and then forming the head 51. Lastly, the bush 11 is mounted inserted into the end 10 of the tubular element 7 and locked in place by forming the projection 77 by crimping.

## Claims

1. Retaining system for a separation element (2) between the passenger compartment and the luggage compartment of a vehicle, such as a safety net or a removable parcel shelf, in which the separation element (2) has at least one first side (5) that can be fixed to the bodywork (4) of the vehicle by first connection means (1a); the said first connection means comprise: a tubular pocket fixed integrally to the first side of the separation element along the entire length thereof; a first substantially rigid tubular element (7) housed sliding inside the tubular pocket (6); a second substantially rigid tubular element (8) housed telescopically and concentrically sliding inside the first tubular element (7), projecting beyond a first end (10) thereof located during use inside the tubular pocket (6); first and second guide means (11, 12) connected to the first and second tubular element (7, 8) and mutually co-operating; resilient means (14) inserted between the first and second guide means (11, 12) to push the second (8) tubular element out of the first (7); and shank-retaining means (18) that can be bound during use to anchoring means (19) mounted on the vehicle bodywork (4); the shank-retaining (18) means being mounted in an axially and angularly fixed position by respective opposite ends (15, 16) of the first and second tubular element (7, 8), said ends facing the opposite way to the first end (10) of the first tubular element (7) and beyond which the retaining means (18) project axially.

2. Retaining system according to Claim 1, **characterised in that** the said shank-retaining means (18) comprise, at each said end (15, 16) of the first and second tubular element (7, 8), a bush made (20) of a synthetic plastic material and lock-fitted in the first and second tubular element (7, 8) respectively, and a metal stem (21) fitted in and projecting from the respective bush (20), so as to project beyond the said end of the first and second tubular element (7, 8) with one of its own opposite ends bent at an angle and having a clinched head (51, 52).

3. Retaining system according to claims 1 or 2, **characterised in that** the said tubular pocket (6) is formed from a piece of sheet material folded back on itself so as to form, along the axis of symmetry of the said first and second tubular element (7, 8), an eyelet that can be fixed integrally to the said first side (5) of the separation element (2).

4. Retaining system according to one of the preceding claims, **characterised in that** the said first guide means consist of a first bush made (11) of a synthetic plastic material and lock-fitted inside the said first end (10) of the first tubular element (7), the said first bush (11) being cup-shaped and having its concavity facing the outside of the first tubular element (7) and towards the second tubular element (8).

5. Retaining system according to claim 4, **characterised in that** the said first bush (11) comprises a side wall (30) by means of which the first bush (11) contact-connects with an inner side surface of the said first end (10) of the first tubular element (7); a first part of the said side wall (30) of the first bush (11) being defined by a sleeve portion (31) inside which it is mounted sliding, in guided connection with an inner side surface of the sleeve portion, a first end (33) of the said second tubular element (8) facing towards the first end (10) of the first tubular element (7).

6. Retaining system according to claim 5, **characterised in that** the said first bush (11) also comprises a bottom wall (34) having a relatively much greater thickness than that of the said sleeve portion (31) and defining a second part of the side wall (30) of the first bush (11).

7. Retaining system according to claim 6, **characterised in that** the said second guide means (12) comprise a second bush (36) made of a synthetic plastic material and lock-fitted inside the said end (33) of the second tubular element (8); the said second bush (36) also being cup-shaped and having its concavity facing the outside of the second tubular element (8) and towards the said first tubular element (7).

8. Retaining system according to claim 7, **characterised in that** the said second guide means (12) also comprise a metal pin (38) integrally carried on the second bush (36), a first end (39) of the said pin (38) being embedded in a bottom wall (40) of the second bush (36) and a second end (49) of the metal pin (36) projecting beyond the second bush (36) towards the first bush (11) and engaging sliding passing through a seat (50) made through the bottom wall (40) of the first bush (11); the said second end (49) of the through-pin (38) having a clinched head (51) designed to abut axially against the said bottom wall (34) of the first bush (11), on the outside of the latter and facing the opposite way to the second bush (36).

9. Retaining system according to claims 7 or 8, **characterised in that** the said resilient (14) means consist of a helical spring pack-mounted between the respective bottom walls (34, 40) of the first and second bushes (11, 36) and housed inside the sleeve portion (31) of the first bush (11) and, partly, inside the second bush (36), which is in turn housed inside the first bush (11) together with the said first end (33) of the second tubular element (8).

10. Retaining system according to one of claims 7 to 9, **characterised in that** the said first and second bushes (11, 36) are locked in place between the said first ends (10, 33) of the first and second tubular element (7, 8) by means of at least one radial recess (70, 71) made radially on the outside of a side wall of the first and second bush (11, 36) and inside which at least one radially internal projection (77) of the first and, respectively, second tubular element (7, 8) defined by radial crimping made from the outside towards the inside on a side wall of said elements (7, 8); and by means of respective end edges (80) of the first (11) and second bush (36) made facing the opposite way to the respective bottom walls (34, 40) thereof and connected in axial abutment to the corresponding peripheral edges of the first ends (10, 33) of the first and second tubular element (7, 8).

11. Retaining system according to any of the preceding claims, **characterised in that** it comprises second connection means (29) to the bodywork (4) of the vehicle by a second side (28) of the said separation element (2) opposite the first tubular element (7)

## Patentansprüche

1. Befestigungssystem für ein Trennelement (2) zwischen dem Fahrgastraum und dem Gepäckraum bzw. Kofferraum eines Fahrzeugs, wie ein Sicherheitsnetz oder eine herausnehmbare Gepäckablage, wobei das Trennelement (2) mindestens eine erste Seite (5) aufweist, die an der Karosserie (4) des Fahrzeugs mittels ersten Befestigungsmitteln (1a) befestigt werden kann, wobei die ersten Befestigungsmittel folgendes umfassen: eine vollständig mit der ersten Seite des Trennelements entlang dessen gesamter Länge befestigte röhrenförmige Tasche; ein erstes im wesentlichen starres röhrenförmiges Element (7), das gleitend in der röhrenförmigen Tasche (6) aufgenommen ist; ein zweites im wesentlichen starres röhrenförmiges Element (8), das teleskopisch und konzentrisch gleitend in dem ersten röhrenförmigen Element (7) aufgenommen ist und über ein erstes Ende (10), das während des Gebrauchs in der röhrenförmigen Tasche (6) angeordnet ist, hinausragt, erste und zweite Führungsmittel (11, 12), die mit dem ersten und dem zweiten röhrenförmigen Element (7, 8) verbunden sind und miteinander kooperieren; elastische Mittel (14), die zwischen dem ersten und dem zweiten Führungsmittel (11, 12) eingesetzt sind, um das zweite röhrenförmige Element (8) aus dem ersten röhrenförmigen Element (7) hinauszudrücken; und Schafthaltemittel (18), die während des Gebrauchs mit an der Fahrzeugkarosserie (4) befestigten Ankermitteln verbunden sein können, wobei die Schafthaltemittel (18) an jeweiligen gegenüberliegenden Enden (15, 16) des ersten und des zweiten röhrenförmigen Elements (7, 8) in einer axial- und drehfesten Position angebracht sind, wobei die Enden von dem ersten Ende (10) des ersten röhrenförmigen Elements (7) wegweisen und wobei sich die Haltemittel (18) axial über die Enden hinaus erstrecken.

2. Befestigungssystem nach Anspruch 1, **dadurch gekennzeichnet, dass** die Schafthaltemittel (18) an jedem Ende (15, 16) des ersten und des zweiten röhrenförmigen Elements (7, 8) eine aus einem Kunststoff hergestellte und verschließend in das erste bzw. das zweite röhrenförmige Element (7, 8) eingepasste Hülse und einen in die jeweilige Hülse(20) eingesetzten und aus dieser hervorstehenden Metallstiel (21) umfassen, so dass dieser über das Ende des ersten und des zweiten röhrenförmigen Elements (7, 8) hinausragt, wobei eines seiner eigenen entgegengesetzten Enden um einen Winkel abgewinkelt ist und einen angenieteten Kopf (51, 52) aufweist.

3. Befestigungssystem nach Anspruch 1 oder 2, **dadurch gekennzeichnet, dass** die röhrenförmige Tasche (6) aus einem Stück bahnenförmigem Material gebildet ist, das auf sich selbst zurückgefaltet ist, um entlang der Symmetrieachse des ersten und zweiten röhrenförmigen Elements (7, 8) eine Öse zu bilden, die vollständig an der ersten Seite (5) des Trennelements (2) befestigt werden kann.

4. Befestigungssystem nach einem der voranstehenden Ansprüche, **dadurch gekennzeichnet, dass** das erste Führungsmittel aus einer aus einem Kunststoff hergestellten und verschließend in das erste Ende (10) des ersten röhrenförmigen Elements (7) eingesetzten ersten Hülse (11) besteht, wobei die erste Hülse (11) schalenförmig ausgebildet ist und ihre Konkavität in Richtung der Außenseite des ersten röhrenförmigen Elements (7) und in Richtung des zweiten röhrenförmigen Elements (8) weist.

5. Befestigungssystem nach Anspruch 4, **dadurch gekennzeichnet, dass** die erste Hülse (11) eine Seitenwand (30) umfasst, mittels derer die erste Hülse (11) in verbindendem Kontakt mit einer Innenfläche des ersten Endes (10) des ersten röhrenförmigen Elements (7) steht, wobei ein erster Abschnitt der Seitenwand (30) der ersten Hülse (11) von einem Büchsenabschnitt (31) definiert wird, in der diese in geführter Verbindung mit einer Innenfläche des Büchsenabschnitts gleitend aufgenommen ist, wobei ein erstes Ende (33) des zweiten röhrenförmigen Elements (8) in Richtung des ersten Endes (10) des ersten röhrenförmigen Elements (7) weist.

6. Befestigungssystem nach Anspruch 5, **dadurch gekennzeichnet, dass** die erste Hülse (11) außerdem eine Bodenwand (34) umfasst, die eine bezüglich des Büchsenabschnitts (31) größere Dicke aufweist und einen zweiten Abschnitt der Seitenwand (30) der ersten Hülse (11) definiert.

7. Befestigungssystem nach Anspruch 6, **dadurch gekennzeichnet, dass** die zweiten Führungsmittel (12) eine aus einem Kunststoff hergestellte und verschließend in das Ende (33) des zweiten röhrenförmigen Elements (8) eingepasste zweite Hülse (36) umfassen, wobei die zweite Hülse (36) außerdem schalenförmig ausgebildet ist und ihre Konkavität in Richtung der Außenseite des zweiten röhrenförmigen Elements (8) und in Richtung des ersten röhrenförmigen Elements (7) weist.

8. Befestigungssystem nach Anspruch 7, **dadurch gekennzeichnet, dass** die zweiten Führungsmittel (12) außerdem einen in der zweiten Hülse (36) integral gehaltenen Metallstift (38) umfassen, wobei ein erstes Ende (39) des Stifts (38) in einer Bodenwand (40) der zweiten Hülse (36) eingebettet ist und ein zweites Ende (49) des Metallstifts (36) über die zweite Hülse (36) in Richtung der ersten Hülse (11) hinaussteht und in gleitendem Eingriff stehend durch einen Sitz (50) hindurchtritt, der durchtretend in der Bodenwand (40) der ersten Hülse (11) vorgesehen ist, wobei das zweite Ende (49) des hindurchtretenden Stifts (38) einen angenieteten Kopf (51) aufweist, der dazu ausgeführt ist, in axialer Richtung an der Bodenwand (34) der ersten Hülse (11) auf deren Außenseite anzuliegen und in entgegengesetzter Richtung zu der zweiten Hülse (36) wegzuweisen.

9. Befestigungssystem nach Anspruch 7 oder 8, **dadurch gekennzeichnet, dass** die elastischen Mittel (14) aus einer zwischen der jeweiligen Bodenwand (34, 40) der ersten und zweiten Hülse (11, 36) angeordneten Spiralfederanordnung besteht und innerhalb des Büchsenabschnitts (31) der ersten Hülse (11) und teilweise in der zweiten Hülse (36) aufgenommen ist, die wiederum in der ersten Hülse (11) zusammen mit dem ersten Ende (33) des zweiten röhrenförmigen Elements (8) aufgenommen ist.

10. Befestigungssystem nach einem der Ansprüche 7 bis 9, **dadurch gekennzeichnet, dass** die erste und zweite Hülse (11, 36) ortsfest zwischen dem ersten Ende (10, 33) des ersten und zweiten röhrenförmigen Elements (7, 8) mittels mindestens einer radialen Ausnehmung (70, 71), die radial auf der Außenseite einer Seitenwand der ersten und zweiten Hülse (11, 36) angeordnet ist und innerhalb derer mindestens ein radial nach innen gerichteter Vorsprung (77) des ersten bzw. des zweiten röhrenförmigen Elements (7, 8), der durch radiales Bördeln bzw. Falzen definiert ist und ausgehend von der Außenseite in Richtung der Innenseite einer Seitenwand der Elemente (7, 8) hergestellt ist, und mittels jeweiliger Endkanten (80) der ersten (11) und der zweiten Hülse (36) befestigt sind, die von deren jeweiligen Bodenwänden (34, 40) wegweisend ausgeführt und mit den entsprechenden äußeren Kanten der ersten Enden (10, 33) des ersten und des zweiten röhrenförmigen Elements (7, 8) axial anliegend verbunden sind.

11. Befestigungssystem nach einem der voranstehenden Ansprüche, **dadurch gekennzeichnet, dass** dieses mittels einer entgegengesetzt zu dem ersten röhrenförmigen Element (7) angeordneten zweiten Seite (28) des Trennelements (2) zweite Befestigungsmittel (29) an der Karosserie (4) des Fahrzeugs aufweist.

## Revendications

1. Système de retenue pour un élément de séparation (2) entre l'habitacle et le compartiment à bagages d'un véhicule, tel qu'un filet de sécurité ou une plage arrière amovible, dans lequel l'élément de séparation (2) a au moins un premier côté (5) qui peut être fixé à la carrosserie (4) du véhicule par des premiers moyens de liaison (1a) ; lesdits premiers moyens de liaison comprenant : une poche tubulaire fixée d'un seul tenant au premier côté de l'élément de séparation le long de sa longueur entière ; un premier élément tubulaire (7) sensiblement rigide logé de manière coulissante à l'intérieur de la poche tubulaire (6) ; un deuxième élément tubulaire (8) sensiblement rigide logé de manière télescopique et coulissant de manière concentrique à l'intérieur du premier élément tubulaire (7), faisant saillie au-delà d'une première extrémité (10) de celui-ci située en utilisation à l'intérieur de la poche tubulaire (6) ; des premiers et deuxièmes moyens de guidage (11, 12) reliés au premier et deuxième éléments tubulaires (7, 8) et coopérant mutuellement ; des moyens élastiques (14) insérés entre les premiers et deuxièmes moyens de guidage (11, 12) pour pousser le deuxième élément tubulaire (8) hors du premier (7) ; et des moyens de retenue de tige (18) qui peuvent être liés en utilisation à des moyens d'ancrage (19) montés sur la carrosserie de véhicule (4), les moyens de retenue de tige (18) étant montés dans une position fixe axialement et angulairement par les extrémités (15, 16) opposées respectives des premier et deuxième éléments tubulaires (7, 8), lesdites extrémités étant orientées à l'opposé de la première extrémité (10) du premier élément tubulaire (7) et au-delà desquelles les moyens de retenue (18) font saillie axialement.

2. Système de retenue selon la revendication 1, **caractérisé en ce que** lesdits moyens de retenue de tige (18) comprennent, à chaque dite extrémité (15, 16) des premier et deuxième éléments tubulaires (7, 8), une douille (20) réalisée en une matière plastique synthétique et insérée et verrouillée dans les premier et deuxième éléments tubulaires (7, 8) respectivement, et une tige métallique (21) insérée dans la douille (20) respective et faisant saillie de celle-ci de manière à faire saillie au-delà de ladite extrémité des premier et deuxième éléments tubulaires (7, 8), l'une de ses propres extrémités opposées étant pliée selon un angle et comportant une tête rivetée (51, 52).

3. Système de retenue selon la revendication 1 ou 2, **caractérisé en ce que** ladite poche tubulaire (6) est réalisée à partir d'un élément de matériau en feuille replié sur lui-même de manière à former, le long de l'axe de symétrie desdits premier et deuxième éléments tubulaires (7, 8), un oeillet qui peut être fixé d'un seul tenant audit premier côté (5) de l'élément de séparation (2).

4. Système de retenue selon l'une des revendications précédentes, **caractérisé en ce que** lesdits premiers moyens de guidage consistent en une première douille (11) réalisée en une matière plastique synthétique et insérée et verrouillée à l'intérieur de ladite première extrémité (10) du premier élément tubulaire (7), ladite première douille (11) ayant la forme d'une coupelle et ayant sa concavité orientée vers l'extérieur du premier élément tubulaire (7) et vers le deuxième élément tubulaire (8).

5. Système de retenue selon la revendication 4, **caractérisé en ce que** ladite première douille (11) comprend une paroi latérale (30) au moyen de laquelle la première douille (11) est reliée par contact à une surface latérale interne de ladite première extrémité (10) du premier élément tubulaire (7) ; une première partie de ladite paroi latérale (30) de la première douille (11) étant définie par une partie de manchon (31) à l'intérieur de laquelle elle est montée de manière coulissante, en relation guidée avec une surface latérale interne de la partie de manchon, une première extrémité (33) dudit deuxième élément tubulaire (8) étant orientée vers la première extrémité (10) du premier élément tubulaire (7).

6. Système de retenue selon la revendication 5, **caractérisé en ce que** ladite première douille (11) comprend également une paroi inférieure (34) ayant une épaisseur relativement beaucoup plus grande que celle de ladite partie de manchon (31) et définissant une deuxième partie de la paroi latérale (30) de la première douille (11).

7. Système de retenue selon la revendication 6, **caractérisé en ce que** lesdits deuxièmes moyens de guidage (12) comprennent une deuxième douille (36) réalisée en une matière plastique synthétique et insérée et verrouillée à l'intérieur de ladite extrémité (33) du deuxième élément tubulaire (8) ; ladite deuxième douille (36) ayant également la forme d'une coupelle et ayant sa concavité orientée vers l'extérieur du deuxième élément tubulaire (8) et vers ledit premier élément tubulaire (7).

8. Système de retenue selon la revendication 7, **caractérisé en ce que** lesdits deuxièmes moyens de guidage (12) comprennent également une broche métallique (38) supportée d'un seul tenant sur la deuxième douille (36), une première extrémité (39) de ladite broche (38) étant intégrée dans une paroi inférieure (40) de la deuxième douille (36) et une deuxième extrémité (49) de la broche métallique (36) faisant saillie au-delà de la deuxième douille (36) vers la première douille (11) et s'engageant de manière coulissante à travers un siège (50) réalisé à travers la paroi inférieure (40) de la première douille (11) ; ladite deuxième extrémité (49) de la broche traversante (38) comportant une tête rivetée (51) conçue pour venir en butée axialement contre ladite paroi inférieure (34) de la première douille (11), sur l'extérieur de cette dernière et orientée à l'opposé de la deuxième douille (36).

9. Système de retenue selon la revendication 7 ou 8, **caractérisé en ce que** lesdits moyens élastiques (14) consistent en un ressort hélicoïdal monté entre les parois inférieures (34, 40) respectives des première et deuxième douilles (11, 36) et logé à l'intérieur de la partie de manchon (31) de la première douille (11) et, en partie, à l'intérieur de la deuxième douille (36), qui est à son tour logée à l'intérieur de la première douille (11) avec ladite première extrémité (33) du deuxième élément tubulaire (8).

10. Système de retenue selon l'une des revendications 7 à 9, **caractérisé en ce que** lesdites première et deuxième douilles (11, 36) sont verrouillées en place entre lesdites premières extrémités (10, 33) des premier et deuxième éléments tubulaires (7, 8) au moyen d'au moins un évidement radial (70, 71) réalisé radialement sur l'extérieur d'une paroi latérale des première et deuxième douilles (11, 36) et à l'intérieur duquel au moins une protubérance (77) radialement interne du premier et, respectivement, du deuxième élément tubulaire (7, 8) définie par un sertissage radial réalisé de l'extérieur vers l'intérieur sur une paroi latérale dudit élément (7, 8), et au moyen des bords d'extrémité (80) respectifs des première (11) et deuxième (36) douilles réalisés de manière à être orientés à l'opposé des parois inférieures (34, 40) respectives de celles-ci et reliés en butée axiale aux bords périphériques correspondants des premières extrémités (10, 33) des premier et deuxième éléments tubulaires (7, 8).

11. Système de retenue selon l'une quelconque des revendications précédentes, **caractérisé en ce qu'**il comprend des deuxièmes moyens de liaison (29) à la carrosserie (4) du véhicule par un deuxième côté (28) dudit élément de séparation (2) face au premier élément tubulaire (7).
